# EUROPÄISCHE PATENTANMELDUNG

(11) **EP 1 621 385 A1**
(43) Veröffentlichungstag der Anmeldung: **01.02.2006**
(21) Anmeldenummer: 05016046.4
(22) Anmeldetag: 23.07.2005
(51) Int. Cl.: B60J 7/22, B29C 45/14

(54) **Element für Kraftfahrzeuge und Verfahren zur Herstellung desselben**

(30) Priorität: 28.07.2004 DE 102004038070
(71) Anmelder: ORIS FAHRZEUGTEILE HANS RIEHLE GmbH, 71696 Möglingen (DE)
(72) Erfinder: Götz, Matthias, 71706 Markgröningen (DE); Neumann, Peter, 71720 Oberstenfeld (DE); Riehle, Jörg, 71679 Asperg (DE)
(74) Vertreter: Hoeger, Stellrecht & Partner Patentanwälte

(57) **Zusammenfassung**

Um ein Element für Kraftfahrzeuge zum Schutz gegen Wind oder Sonneneinstrahlung, umfassend einen Rahmen mit einer Rahmenöffnung, in welcher sich ein windhinderndes oder Sonnenlicht dämpfendes Flachmaterialstück erstreckt, welches an dem Rahmen gehalten ist, derart zu verbessern, daß dieses möglichst einfach konzipiert und daher auch möglichst einfach herstellbar ist, wird vorgeschlagen, daß ein Randbereich des Flachmaterialstücks in den Rahmen eingebettet wird und daß der Rahmen im Zuge eines Flüssiggießverfahrens an den Randbereich des Flachmaterialstücks angeformt und dadurch mit dem Randbereich verbunden wird.

## Beschreibung

Die Erfindung betrifft ein Element für Kraftfahrzeuge zum Schutz gegen Wind und/oder Sonneneinstrahlung und/oder Sicht, umfassend einen Rahmen mit einer Rahmenöffnung, in welcher sich ein windhinderndes oder sonnenlichtdämpfendes Flachmaterialstück erstreckt, welches an dem Rahmen gehalten ist.

Derartige Elemente sind aus dem Stand der Technik beispielsweise der DE 100 53 701 A1 bekannt.

Bei derartigen Elementen besteht das Problem, daß diese aufwendig konzipiert sind, insbesondere im Hinblick auf die Fixierung des Flachmaterialstücks an dem Rahmen. Diese erfolgt üblicherweise durch eine im Rahmen vorgesehene Nut, in welche ein Flachmaterialstück mittels eines Keders eingedrückt wird.

Der Erfindung liegt daher die Aufgabe zugrunde, ein Element der gattungsgemäßen Art derart zu verbessern, daß dieses möglichst einfach konzipiert und daher auch möglichst einfach herstellbar ist.

Diese Aufgabe wird bei einem Element der eingangs beschriebenen Art erfindungsgemäß dadurch gelöst, daß ein Randbereich des Flachmaterialstücks in den Rahmen eingebettet ist und daß der Rahmen im Zuge eines Flüssiggießverfahrens an den Randbereich des Flachmaterials angeformt und dadurch mit dem Randbereich verbunden ist.

Der Vorteil des erfindungsgemäßen Elements ist darin zu sehen, daß dieses aufgrund dieser Konzeption einfach herstellbar ist und andererseits eine dauerhafte Verbindung zwischen dem Randbereich des Flachmaterialstücks und dem Rahmen aufweist, die weit dauerhafter ist als die aus dem Stand der Technik bekannte kraftschlüssige Verbindung zwischen dem Randbereich des Flachmaterialstücks und dem Rahmen.

Besonders vorteilhaft ist es, wenn das Anformen des Rahmens an den Randbereich des Flachmaterialstücks eine stoffschlüssige Verbindung zwischen dem Rahmen und dem Flachmaterialstück schafft.

Eine besonders einfache Herstellung ist dann möglich, wenn der Randbereich des Flachmaterialstücks in dem durch Spritzgießen angeformten Rahmen eingebettet ist, so daß sich die Verbindung zwischen dem Randbereich des Flachmaterialstücks und dem Rahmen im Zuge eines bekannten Spritzgießverfahrens herstellen läßt.

Hinsichtlich der Anordnung des Randbereiches des Flachmaterialstücks und des Rahmens relativ zueinander sind die unterschiedlichsten Lösungen denkbar. So sieht eine günstige Ausführungsform vor, daß der Randbereich des Flachmaterialstücks über einen Eintrittsbereich in den Rahmen eintritt und über einen Austrittsbereich des Rahmens aus diesem austritt, so daß letztlich der Randbereich den Rahmen vollständig durchsetzt.

Insbesondere ist dabei vorgesehen, daß sich der Randbereich bis zu einer außerhalb des Rahmens liegenden Trennkante erstreckt. Damit ist sichergestellt, daß der Randbereich des Flachmaterialstücks vollständig in dem Material des Rahmens eingebettet und somit stabil mit dem Rahmen verbunden ist und insbesondere keine mangelhaften Verbindungen zwischen dem Randbereich und dem Rahmen aufgrund einer ungünstigen Einbettung des Randbereichs auftreten können.

Aus Gründen einer formschönen Außenkontur ist es andererseits vorteilhaft, wenn die Trennkante im Austrittsbereich mit einer Außenseite des Rahmens abschließt, so daß der Randbereich des Flachmaterialstücks nicht weit über den Rahmen übersteht und somit keinen optisch störenden Rand bildet.

Besonders günstig ist es hierbei, wenn die Trennkante im wesentlichen bündig mit der Außenseite des Rahmens abschließt.

Eine andere vorteilhafte Lösung sieht vor, daß der Randbereich und die Trennkante des Flachmaterialstücks vollständig in dem Rahmen eingebettet sind. In diesem Fall dringt somit der Randbereich in den Rahmen nur über den Eintrittsbereich ein, tritt jedoch nicht wieder aus diesem aus. Dies hat den Vorteil, daß damit der Rahmen ein optisch verbessertes Aussehen aufweist und insbesondere die Trennkante des Flachmaterialstücks, die einen optisch unschönen Eindruck vermitteln kann, nicht sichtbar ist.

Ein vorteilhaftes Ausführungsbeispiel sieht vor, daß der Randbereich beiderseits vollflächig in den Rahmen eingebettet ist, um eine mangelhafte Verbindung zwischen dem Randbereich des Flachmaterialstücks und dem Material des Rahmens zu vermeiden, die dadurch entstehen kann, daß der Randbereich im wesentlichen nur einseitig in den Rahmen eingebettet ist und andererseits mit zur Bildung einer Außenkontur des Rahmens beiträgt, so daß die Verbindung zwischen dem Randbereich des Flachmaterialstücks und dem Rahmen einerseits weniger belastbar ist und andererseits auch dadurch ein optisch unschön aussehendes Erscheinungsbild des Rahmens entstehen kann.

Hinsichtlich des Flachmaterialstücks wurden bislang keine näheren Angaben gemacht.

Es ist denkbar, daß das Flachmaterialstück ein in sich steifes Material ist.

Eine weitere Lösung sieht vor, daß das Flachmaterialstück aus einem biegeschlaffen Material ist.

Besonders zweckmäßig ist es dabei, wenn das Flachmaterialstück aus einem eine Formsteifigkeit des Rahmens nicht fördernden Material ist, so daß die Stabilität des Elements durch den Rahmen selbst und somit eine ausreichend steife Rahmenkonstruktion geschaffen werden muß.

Um ein vorteilhaftes Aussehen des Flachmaterialstücks in dem Rahmen zu gewährleisten, ist vorzugsweise vorgesehen, daß das Flachmaterialstück in dem angespritzten Rahmen gespannt gehalten ist.

Dies läßt sich besonders einfach dann realisieren, wenn das Flachmaterialstück zugelastisch ausgebildet ist.

Ein besonders günstiges optisches Aussehen des Flachmaterialstücks in dem Rahmen ist dann erreichbar, wenn das Flachmaterialstück in dem Rahmen in Richtung seiner Flächenausdehnung unter Spannung gehalten ist, das heißt in der Regel in zwei oder mehr quer zueinander verlaufenden Richtungen unter Spannung gehalten ist und nicht nur in einer Richtung.

Grundsätzlich ist es im Rahmen der erfindungsgemäßen Lösung denkbar, das Element selbst unmittelbar als solches für ein Windschott oder einen Sonnenschutz selbst einzusetzen.

Um gegebenenfalls optische und mechanische Eigenschaften des Elements verbessern oder geeignet an die Verwendungsmöglichkeiten anpassen zu können, sieht ein vorteilhaftes Ausführungsbeispiel vor, daß der Rahmen als ein an das Flachmaterialstück angespritzter Grundrahmen ausgebildet ist und einen zumindest teilweise den Grundrahmen umschließenden Außenrahmen trägt.

Ein derartiger Außenrahmen schafft beispielsweise die Möglichkeit, diesen so auszubilden, daß der Außenrahmen die Trennkante des Randbereichs überdeckt, so daß dadurch die optischen Beeinträchtigungen vermieden werden können, die dann auftreten, wenn die Trennkante des Randbereichs am Rahmen sichtbar ist oder im Abstand vom Rahmen verläuft.

Eine derartige Trennkante kann beispielsweise auch der Grund für eine potentielle Verletzungsgefahr sein, die sich ebenfalls durch einen Außenrahmen vermeiden läßt.

Besonders günstig ist es dabei, wenn der Außenrahmen einen über den Austrittsbereich überstehenden Teil des Randbereichs überdeckt, so daß der gesamte, über den Grundrahmen überstehende Teil des Randbereichs vom Außenrahmen abgeschirmt ist.

Noch vorteilhafter ist es, wenn der Außenrahmen den Austrittsbereich des Randbereichs des Flachmaterialstücks am Grundrahmen überdeckt.

Hinsichtlich der Fixierung des Außenrahmens am Grundrahmen sind die unterschiedlichsten Möglichkeiten denkbar. Eine vorteilhafte Lösung sieht vor, daß der Außenrahmen auf den Grundrahmen formschlüssig aufgesetzt ist.

Eine andere vorteilhafte Lösung sieht vor, daß der Außenrahmen an dem Grundrahmen mit Fixierelementen gehalten ist.

Eine besonders bevorzugte Lösung sieht vor, daß der Außenrahmen an den Grundrahmen stoffschlüssig fixiert ist.

Eine derartige stoffschlüssige Fixierung sieht beispielsweise ein Verkleben von Außenrahmen und Grundrahmen vor. Noch günstiger ist es, wenn der Außenrahmen an den Grundrahmen angespritzt ist.

Darüber hinaus betrifft die Erfindung ein Verfahren zur Herstellung eines Elements für Kraftfahrzeuge zum Windschutz und/oder Sonnenschutz, bei welchem ein windhinderndes und/oder sonnenstrahlungdämpfendes Flachmaterialstück an einem Rahmen fixiert ist, wobei erfindungsgemäß die eingangs genannte Aufgabe dadurch gelöst wird, daß der Rahmen im Zuge eines Flüssiggießverfahrens an einen Randbereich des Flachmaterialstücks angeformt wird.

Dieses Verfahren ist einfach auszuführen und führt zu einer besonders stabilen Verbindung zwischen dem Rahmen und dem Flachmaterialstück, insbesondere wenn eine stoffschlüssige Verbindung zwischen dem Material des Rahmens und dem Randbereich des Flachmaterials entsteht.

Besonders stabil und günstig ist diese Verbindung zwischen dem Randbereich des Flachmaterialstücks und dem Rahmen, wenn der Rahmen den Randbereich beiderseits einbettend angeformt wird, so daß dadurch der Randbereich zwischen Materialbereichen des Rahmens liegt und nicht an einer Oberfläche des Rahmens zu Liegen kommt.

Dabei kann der Rahmen derart angeformt sein, daß der Randbereich in den Rahmen in einem Eintrittsbereich eintritt und in einem Austrittsbereich austritt, das heißt den Rahmen zumindest in Teilbereichen durchsetzt.

Diese Lösung hat den Vorteil, daß sich dabei bei dem Flüssiggießverfahren der Randbereich in vorteilhafter Weise fixieren läßt.

Eine andere zweckmäßige Ausführungsform sieht vor, daß der Rahmen den Randbereich und eine Trennkante einbettend angeformt wird und somit die Trennkante später an dem Rahmen nicht sichtbar ist. Dies ist besonders vorteilhaft, wenn der Rahmen unmittelbar ohne Verkleidung eingesetzt werden soll, da damit der Rahmen in zufriedenstellender optischer Qualität ausgeführt werden kann.

Um ein günstiges Aussehen des erfindungsgemäßen Elements zu gewährleisten ist es günstig, wenn das Flachmaterialstück zuerst gespannt und nachfolgend in dem gespannten Zustand der Rahmen an den Randbereich angeformt wird.

Das Spannen des Flachmaterialstücks kann in unterschiedlichster Art und Weise erfolgen. So sieht eine vorteilhafte Lösung vor, daß das Flachmaterialstück innerhalb der späteren Rahmenöffnung gespannt gehalten wird und dann in dem gespannten Zustand der Rahmen an den überstehenden Randbereich angeformt wird.

Eine andere vorteilhafte Lösung sieht vor, daß das Flachmaterialstück außerhalb des anzuspritzenden Rahmens gespannt gehalten und der Rahmen dann in dem gespannten Zustand angespritzt wird.

Eine weitere zweckmäßige Lösung sieht vor, daß das Flachmaterialstück durch die Gießform während des Anspritzens des Rahmens gespannt gehalten wird.

Dies ist beispielsweise dadurch realisierbar, daß das Flachmaterialstück in der Gießform zum Anspritzen des Rahmens eingeklemmt wird.

Eine andere zweckmäßige Möglichkeit sieht vor, daß das Flachmaterialstück innerhalb des Randbereichs fixiert und der Randbereich zum Anformen des Rahmens in der Gießform aufgenommen wird. Beispielsweise erfolgt ein derartiges Aufnehmen des Randbereichs durch Nadeln.

Hinsichtlich der Herstellung des Flachmaterialstücks mit dem Randbereich wurden bislang keine näheren Angaben gemacht. So sieht ein vorteilhaftes Ausführungsbeispiel vor, daß das Flachmaterialstück längs einer Trennkante aus einer Flachmaterialbahn herausgetrennt wird.

Dabei kann die Trennkante in großem Abstand von dem Randbereich verlaufen. Eine besonders materialsparende Lösung sieht vor, daß die Trennkante an den Randbereich angrenzt.

Hinsichtlich des Zeitpunktes des Heraustrennens wurden bislang keine näheren Angaben gemacht. So sieht eine vorteilhafte Vorgehensweise vor, daß das Flachmaterialstück vor einem Anformen des Rahmens längs zur Trennkante herausgetrennt wird.

Eine alternative Vorgehensweise sieht vor, daß das Flachmaterialstück in der Gießform längs der Trennkante aus einem Flachmaterial herausgetrennt wird.

Ein derartiges Trennen in der Gießform läßt sich beispielsweise dadurch realisieren, daß beim Schließen oder Öffnen der Gießform das Flachmaterialstück längs der Trennkante aus einem Flachmaterial herausgetrennt wird.

Die Trennkante kann beispielsweise durch einen Heißdraht oder ein anderes Verfahren hergestellt werden. Eine besonders einfache Ausführungsform sieht vor, daß die Trennkante eine Schnittkante ist.

Insbesondere dann, wenn der Randbereich mitsamt der Trennkante in den Rahmen eingebettet wird oder auch in anderen Fällen hat es sich als günstig erwiesen, wenn der Randbereich des Flachmaterialstücks vor dem Anformen des Rahmens stabilisiert wird, so daß insbesondere bei biegeschlaffem Flachmaterial der Randbereich eine gewisse Steifigkeit aufweist und somit seine Position in der Gießform beim Anformen des Rahmens beibehält.

Im einfachsten Fall läßt sich eine derartige Stabilisierung des Randbereichs dadurch herbeiführen, daß der Randbereich versteift wird.

Das Versteifen ist dabei durch Aufbringen eines versteifenden Stoffes oder eines versteifenden Elements realisierbar.

Ferner wurde im Zusammenhang mit der bisherigen Erläuterung der einzelnen Ausführungsbeispiele nicht darauf abgestellt, wie das erfindungsgemäße Element insgesamt aufgebaut sein soll. Im einfachsten Fall kann der angeformte Rahmen selbst ausreichend sein.

Eine weitere vorteilhafte Lösung sieht jedoch vor, daß der Rahmen als Grundrahmen an den Randbereich angeformt wird und auf dem Grundrahmen ein Außenrahmen angeordnet wird.

Ein derartiger Außenrahmen schafft den Vorteil, daß dieser entweder die Möglichkeit bietet, geeignete, beispielsweise gegen Verletzung schützende Materialien zu verwenden, die völlig anders sein könnten, als die Materialien, aus denen der Rahmen hergestellt ist, der für die Stabilität des erfindungsgemäßen Elements verantwortlich ist, oder dadurch, daß mit dem Außenrahmen aufgrund des Anformens desselben an den Randbereich optisch unschöne Bereiche abgedeckt werden.

Eine besonders geeignete Lösung zur Fixierung des Außenrahmens sieht vor, daß dieser formschlüssig auf den Grundrahmen aufgesetzt wird.

Eine andere vorteilhafte Lösung sieht vor, daß der Außenrahmen stoffschlüssig am Grundrahmen gehalten wird.

Eine weitere zweckmäßige Lösung sieht vor, daß der Außenrahmen an den Grundrahmen angeformt wird und somit sich ebenfalls beispielsweise in einem Flüssiggießverfahren anformen läßt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

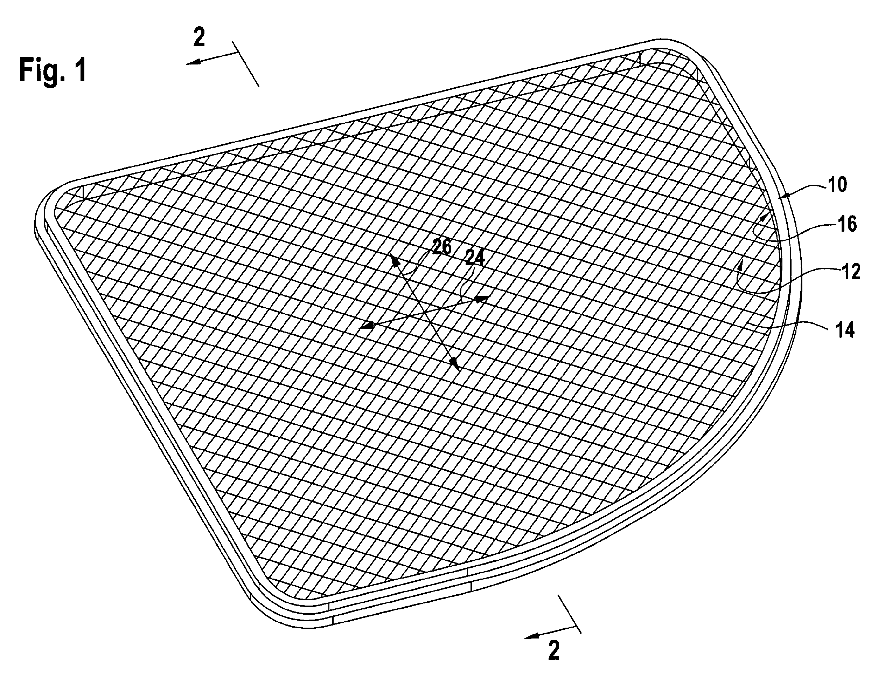

- Fig. 1: eine perspektivische Draufsicht auf ein erstes Ausführungsbeispiel des erfindungsgemäßen Elements;
- Fig. 2: einen Schnitt längs Linie 2-2 in Fig. 1;
- Fig. 3: eine schematische Darstellung eines Ausführungsbeispiels einer erfindungsgemäßen Positioniereinrichtung zur Herstellung des Rahmens gemäß dem ersten Ausführungsbeispiel;
- Fig. 4: eine Darstellung ähnlich Fig. 3 mit einem in der Positioniereinrichtung unter Zugspannung fixierten Bereich einer Flachmaterialbahn;
- Fig. 5: eine Darstellung ähnlich Fig. 4 mit der in einer Gießform angeordneten Positioniereinrichtung zur Ausrichtung des Flachmaterialstücks in der Gießform;
- Fig. 6: einen Schnitt ähnlich Fig. 2 nach Entnehmen des erfindungsgemäßen Elements und vor einer Ausbildung einer Trennkante;
- Fig. 7: einen Schnitt ähnlich Fig. 2 durch ein zweites Ausführungsbeispiel eines erfindungsgemäßen Elements;
- Fig. 8: eine Darstellung einer Gießform für die Herstellung eines dritten Ausführungsbeispiels eines erfindungsgemäßen Elements umfassend einen Grundrahmen und einen Außenmantel;
- Fig. 9: eine Darstellung ähnlich Fig. 5 zur Herstellung eines vierten Ausführungsbeispiels eines erfindungsgemäßen Elements;
- Fig. 10: einen Schnitt ähnlich Fig. 5 durch eine Gießform zur Herstellung eines fünften Ausführungsbeispiels eines erfindungsgemäßen Elements;
- Fig. 11: eine Draufsicht auf eine Vorrichtung zum Aufbringen einer Zugspannung auf einen Teilabschnitt einer Flachmaterialbahn zur Herstellung eines sechsten Ausführungsbeispiels eines erfindungsgemäßen Elements;
- Fig. 12: eine Draufsicht ähnlich Fig. 11 auf eine Variante einer Vorrichtung zum Aufbringen einer Zugspannung auf einen Teilabschnitt einer Flachmaterialbahn zur Herstellung des sechsten Ausführungsbeispiels des erfindungsgemäßen Elements;
- Fig. 13: einen Schnitt ähnlich Fig. 5 durch eine Gießform zur Herstellung des sechsten Ausführungsbeispiels in einer Stellung beim Einführen der Flachmaterialbahn;
- Fig. 14: einen Schnitt durch die Gießform ähnlich Fig. 13 bei eingeklemmter Flachmaterialbahn;
- Fig. 15: einen Schnitt durch die Gießform ähnlich Fig. 13 bei komplettiertem Teilwerkzeug unter Einklemmen und Anlegen der Flachmaterialbahn;
- Fig. 16: einen Schnitt durch die Gießform ähnlich Fig. 13 unmittelbar vor einem Spritzgießen;
- Fig. 17: einen Schnitt durch die Gießform ähnlich Fig. 16 nach dem Spritzgießen;
- Fig. 18: einen Schnitt durch die Gießform ähnlich Fig. 13 unmittelbar vor dem Entnehmen des erfindungsgemäßen Elements mit Flachmaterialstück und Rahmen;
- Fig. 19: einen Schnitt ähnlich Fig. 16 durch eine Gießform zur Herstellung eines siebten Ausführungsbeispiels;
- Fig. 20: eine Ansicht einer Gießform zur Herstellung eines achten Ausführungsbeispiels in geöffneter Stellung zum Einlegen der Flachmaterialbahn;
- Fig. 21: einen Schnitt durch die Gießform ähnlich Fig. 20;
- Fig. 22: einen Schnitt ähnlich Fig. 20 bei geschlossener Gießform;
- Fig. 23: einen Schnitt ähnlich Fig. 21 durch die geschlossene Gießform;
- Fig. 24: einen Schnitt ähnlich Fig. 22 bei eingespannter Flachmaterialbahn;
- Fig. 25: einen Schnitt ähnlich Fig. 24 bei eingespannter Flachmaterialbahn und Einschieben eines Schiebers zur Herstellung einer Trennlinie;
- Fig. 26: einen Schnitt ähnlich Fig. 25 beim Herstellen der Trennlinie durch den Schieber und
- Fig. 27: eine perspektivische Darstellung der geöffneten Gießform ähnlich Fig. 20 zum Entnehmen des fertigen Elements.

Ein erstes Ausführungsbeispiel eines erfindungsgemäßen Elements für Kraftfahrzeuge, zum Schutz gegen Wind und/oder Sonneneinstrahlung, umfaßt einen als Ganzes mit 10 bezeichneten Rahmen, der eine Rahmenöffnung 12 umschließt, wobei sich in der Rahmenöffnung 12 ein Flachmaterialstück 14 erstreckt, welches windhindernd und/oder sonnenlichtdämpfend und/oder sichthindernd ausgebildet ist.

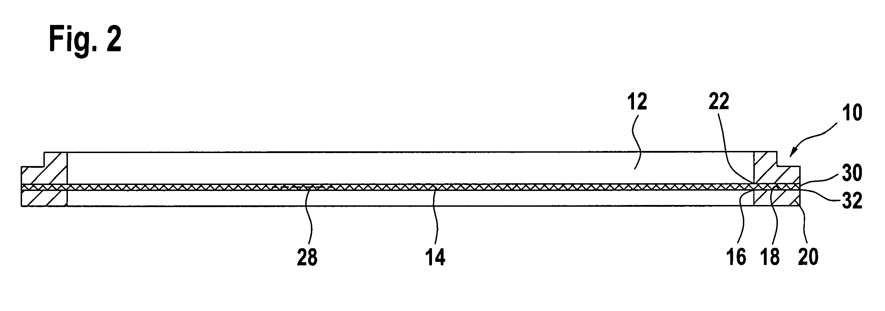

Dieses Flachmaterialstück 14 erstreckt sich über die gesamte Rahmenöffnung 12 und tritt im Bereich eines Öffnungsrandes 16 in den Rahmen 10 ein, so daß das Flachmaterialstück 14, wie in Fig. 2 dargestellt, in ein den Rahmen 10 bildendes Material 20, beispielsweise ein Kunststoffmaterial, eingebettet ist.

Bei dem ersten Ausführungsbeispiel des erfindungsgemäßen Rahmens erstreckt sich der Randbereich 18 von einem am Öffnungsrand 16 liegenden Eintrittsbereich 22 des Rahmens 10 bis zu einem diesem Eintrittsbereich 22 in Ausdehnungsrichtungen 24, 26 einer Ebene 28, in welcher sich das Flachmaterialstück 14 erstreckt, bis zu einem dem Eintrittsbereich 22 gegenüberliegenden Austrittsbereich 30 des Rahmens 10, in welchem eine Trennkante 32 vorliegt, längs welcher das Flachmaterialstück 14 von einem Flachmaterialabschnitt 34 abgetrennt ist (Fig. 2).

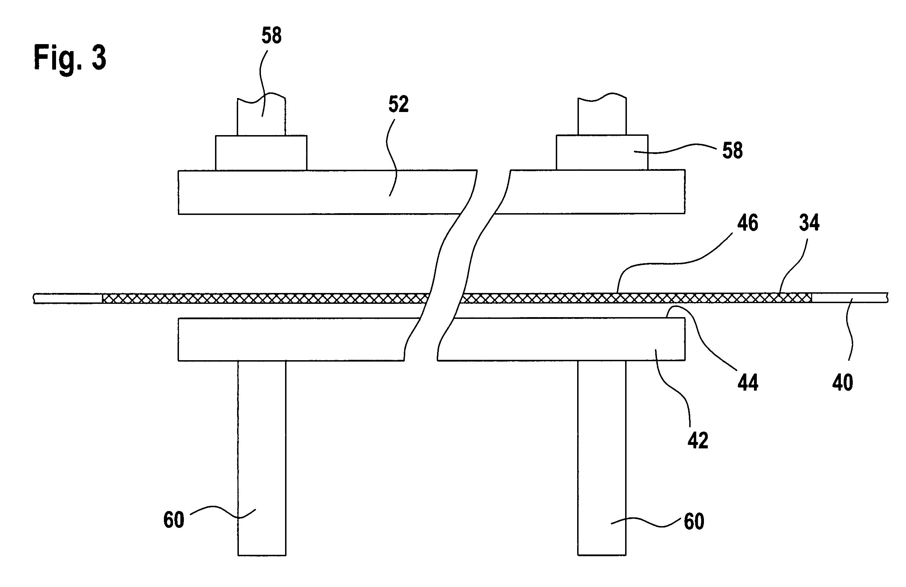

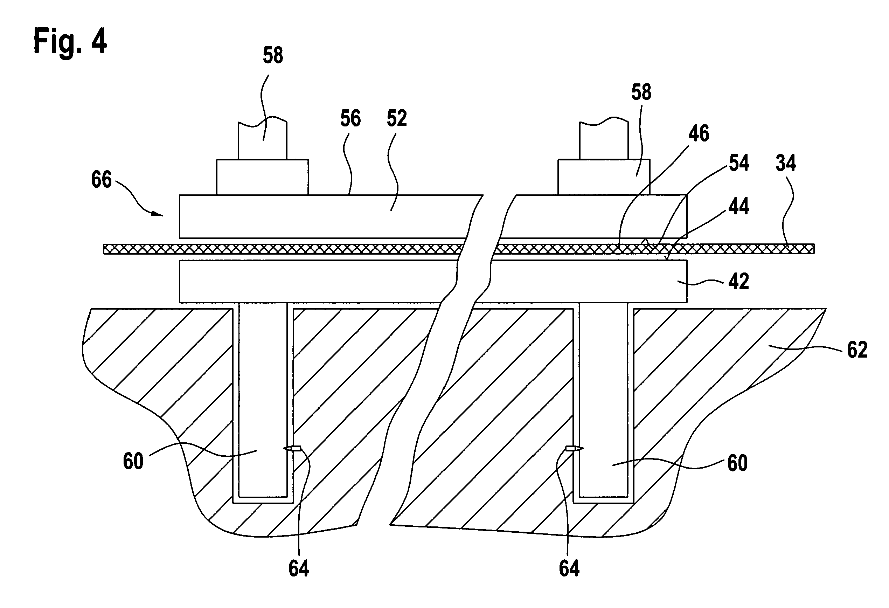

Wie in den Fig. 3 bis 5 dargestellt, erfolgt die Herstellung des erfindungsgemäßen Elements gemäß dem ersten Ausführungsbeispiel dadurch, daß aus einer Flachmaterialbahn 40 der Flachmaterialabschnitt 34 abgeschnitten und über einen Träger 42 gezogen wird, welcher eine Auflageseite 44 aufweist, auf welcher der Flachmaterialabschnitt 34 mit einem Bereich 46 derselben auflegbar ist.

Der Träger 42 hat dabei eine Ausdehnung, die kleiner ist als ein vorgesehener Öffnungsrand 16 des Rahmens 10.

Nach dem Auflegen des Bereichs 46 der Flachmaterialabschnitt 34 auf die Auflageseite 44 des Trägers 42, läßt sich der Bereich 46 dadurch auf dem Träger 42 fixieren, daß dieser auf seiner dem Träger 42 gegenüberliegenden Seite mit einem Andrückelement 52, beispielsweise ausgebildet als plattenförmiges Teil, beaufschlagbar ist, wobei das Andrückelement 52 eine Druckseite 54 aufweist, welche ungefähr dieselbe Ausdehnung wie die Auflageseite 44 des Trägers 42 aufweist.

Somit läßt sich der Bereich 46 der Flachmaterialabschnitt 34 zwischen der Auflageseite 44 und der Druckseite 54 dann einspannen, wenn das Andrückelement 52 gegen den Träger 42 pressbar ist.

Ein derartiges Pressen des Trägers 42 gegen das Andrückelement 52 läßt sich beispielsweise durch zwischen dem Träger 42 und dem Andrückelement 52 durch den Bereich 46 hindurch wirkende Magnetfelder realisieren, wobei entweder der Träger 42 oder das Andrückelement 52 mit Magneten, beispielsweise Permanentmagneten, versehen sind, die die notwendige Anpresskraft zwischen der Auflageseite 44 und der Druckseite 54 erzeugen.

Um das Andrückelement 52 gezielt aufsetzen zu können, greifen an diesem, beispielsweise auf einer der Druckseite 54 gegenüberliegenden Seite 56 Halteeinrichtungen 58 an, die beispielsweise als Unterdrucksaugeelemente ausgebildet sind. Die Halteeinrichtungen 58 können aber ebenfalls magnetisch wirkende oder auch durch Formschluß mit dem Andrückelement 52 wechselwirkende Elemente sein, beispielsweise solche, welche mit Formschlußelementen in entsprechend geformte Vertiefungen im Andrückelement 52 eingreifen.

Durch die bereits beschriebene anziehende Wechselwirkung zwischen dem Träger 42 und dem Andrückelement 52 ist der Bereich 46 des Flachmaterialabschnitts 34 flächig zwischen diesen eingespannt, wobei sich der Bereich 46 durch vorab auf den Flachmaterialabschnitt 34 aufgebrachte Zugkräfte unter Zugspannung versetzen läßt und in diesem unter Zugspannung stehenden Zustand zwischen dem Träger 42 und dem Andrückelement 52 einspannen läßt, so daß dieser unter Zugspannung stehende Zustand innerhalb des Bereichs 46 erhalten bleibt.

Um gezielt das Andrückelement 52 auf den Träger 42 aufsetzen zu können, sind neben den auf das Andrückelement 52 wirkenden Halteeinrichtungen 58, beispielsweise an dem Träger 42, noch Verankerungselemente 60 vorgesehen, mit welchen sich der Träger 42 in einer Aufnahme 62 fixieren läßt, beispielsweise dadurch, daß in der Aufnahme 62 bewegbar vorgesehene Fixierelemente 64 auf die Verankerungselemente 60 wirken, um diese in der Aufnahme 62 festzulegen, so daß insgesamt der Träger 42 durch die Aufnahme 62 fixiert ist und das durch die Halteeinrichtungen 58 gehaltene Andrückelement 52 sich präzise und definiert auf den Träger 42 unter Einspannung des Bereichs 46 aufsetzen läßt.

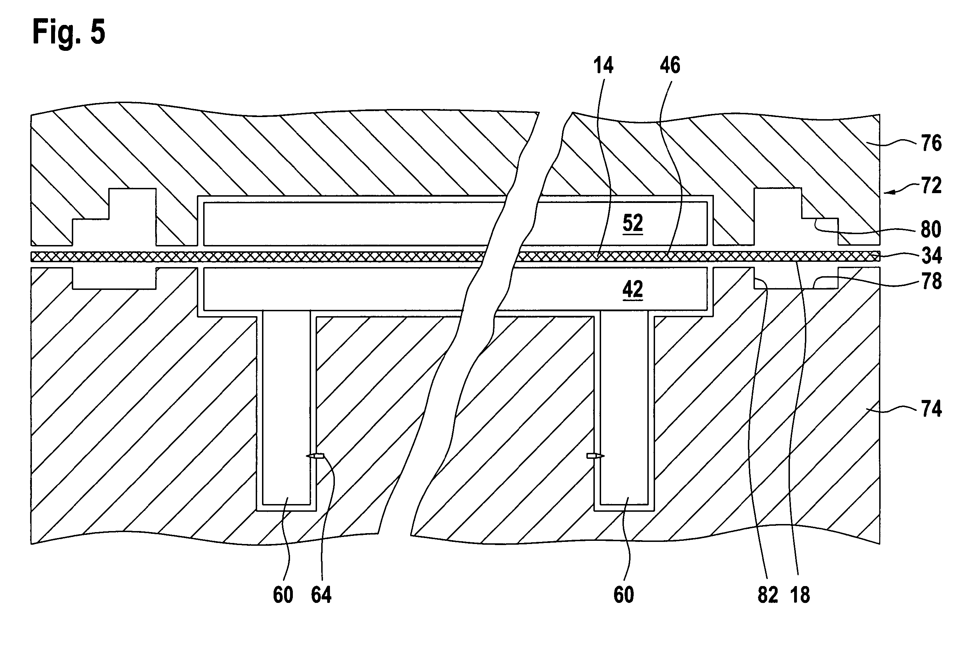

Der Träger 42 und das Andrückelement 52 bilden somit insgesamt eine Positioniereinrichtung 66 für den den Bereich 46 umfassenden Flachmaterialabschnitt 34, welcher dann, wie in Fig. 5 dargestellt, mitsamt der Positioniereinrichtung 66 in ein als Ganzes mit 72 bezeichnetes Spritzgußwerkzeug einsetzbar ist, wobei der Träger 42 mittels der Verankerungselemente 60 in einem Teilwerkzeug 74 des Spritzgußwerkzeugs 72 ebenfalls über Fixierelemente 64 festlegbar ist.

Dabei erstreckt sich der Flachmaterialabschnitt 34 allseits über den Träger 42 und das Andruckelement 52 seitlich hinaus, und zwar unter Bildung des Randbereichs 18, welcher in diesem Fall zwischen dem Teilwerkzeug 74 und einem Teilwerkzeug 76 des Spritzgußwerkzeugs 72 liegt, und zwar im Bereich einer Formausnehmung 78 im Teilwerkzeug 74 und einer Formausnehmung 80 im Teilwerkzeug 76, die sich beide zu einer die Form des Rahmens 10 definierenden Rahmenform 82 als Gießform ergänzen.

Mittels der beidseits des Randbereichs 18 liegenden Formausnehmungen 78 und 80 läßt sich beiderseits an den Randbereich 18 der Rahmen 10 mit seinen entsprechenden Teilen durch Spritzgießen an den Randbereich 18 anformen, so daß der Randbereich 18 später in dem durch Spritzgießen mit dem Teilwerkzeug 74, 76 hergestellten Rahmen 10 eingebettet ist und in dem hierbei geformten Rahmen 10 das Flachmaterial an dem Eintrittsbereich 22 eintritt und am Austrittsbereich 30 austritt.

Nach Herstellung des Rahmens 10 wird zunächst das Teilwerkzeug 76 abgenommen, dann das Andruckelement 52 mit den Halteeinrichtungen 58 abgenommen und schließlich dann der hergestellte Rahmen 10 mit dem Flachmaterialabschnitt 34 aus dem Teilwerkzeug 74 entnommen und gleichzeitig der Bereich 46 des Abschnitts 70 der Flachmaterialbahn 40 von dem Träger 42 abgehoben, der noch in dem Teilwerkzeug 74 verbleibt.

Durch das Abnehmen des Andruckelements 52 wird die durch Einspannen des Bereichs 46 konservierte Zugspannung gelöst, die sich somit auf das sich bis zu den Öffnungsrändern 16 erstreckende Flachmaterialstück 14 verteilt, so daß insgesamt das Flachmaterialstück 14 innerhalb des Rahmens 10 gespannt ist.

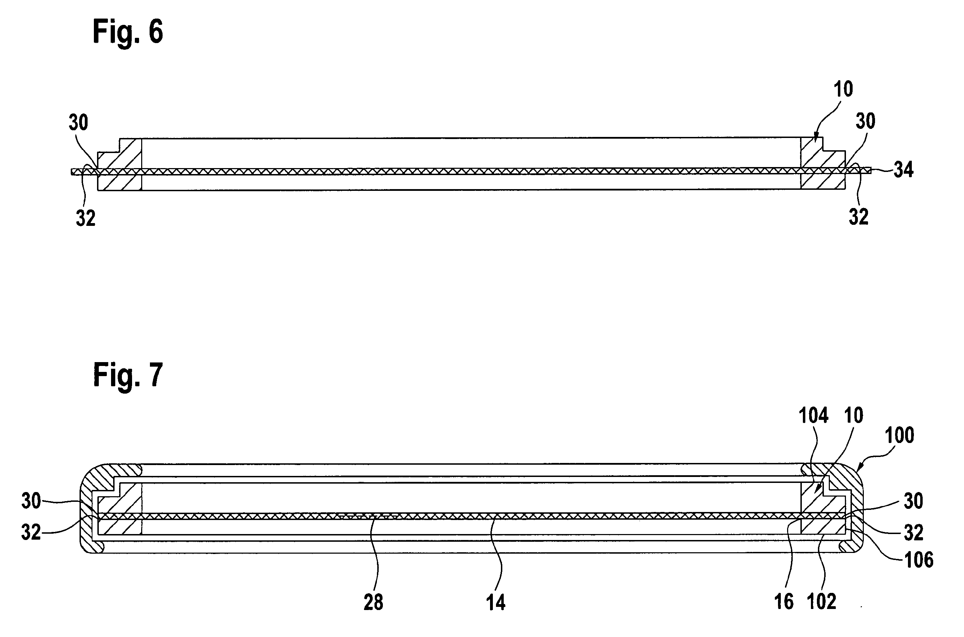

Das außerhalb des Randbereichs 18 liegende Flachmaterial des Abschnitts 70 wird im wesentlichen am Austrittsbereich 30 abgetrennt, so daß die bereits beschriebene Trennkante 32 entsteht, wie sie in Fig. 6 dargestellt ist.

Das erfindungsgemäß hergestellte Element kann nun unmittelbar selbst eingesetzt werden, wobei allerdings die Trennkante 32 einen optisch störenden Eindruck erwecken könnte (Fig. 6).

Aus diesem Grund ist, wie beispielsweise in Fig. 7 dargestellt, bei einem zweiten Ausführungsbeispiel des erfindungsgemäßen Elements, der Rahmen 10 als Grundrahmen verwendet, auf welchen ein Außenrahmen 100 aufgesetzt ist, der zumindest die Trennkante 32 im Austrittsbereich 30 übergreift.

Der Außenrahmen 100 ist dabei beispielsweise so ausgebildet, daß er den Rahmen 10 in Bereichen 102 und 104 übergreift, welche ungefähr parallel zur Ebene 28 verlaufen, und außerdem in einem Außenbereich 106 übergreift, welcher den Austrittsbereich 30 umfaßt und welcher auf einer dem Öffnungsrand 16 des Rahmens 10 gegenüberliegenden Seite sitzt, so daß der Außenrahmen 100 den Grundrahmen 10 in einem für dessen optisches Erscheinungsbild nennenswertem Umfang überdeckt.

Der Außenrahmen 100 kann dabei beispielsweise durch eine Klebemasse an dem Grundrahmen 10 gehalten sein oder, wie in Fig. 7 dargestellt, den Grundrahmen 10 derart formschlüssig, insbesondere in den Bereichen 102 und 104 sowie 106 umgreifen, daß insgesamt eine formschlüssige Fixierung vorliegt.

Zum Erreichen dieser formschlüssigen Fixierung besteht beispielsweise die Möglichkeit, den Außenrahmen 100 aus einem elastischen Material herzustellen, so daß der Außenrahmen 100 durch Deformation die Bereiche 102 und 104 sowie 106 übergreifend auf den Grundrahmen 10 aufbringbar ist.

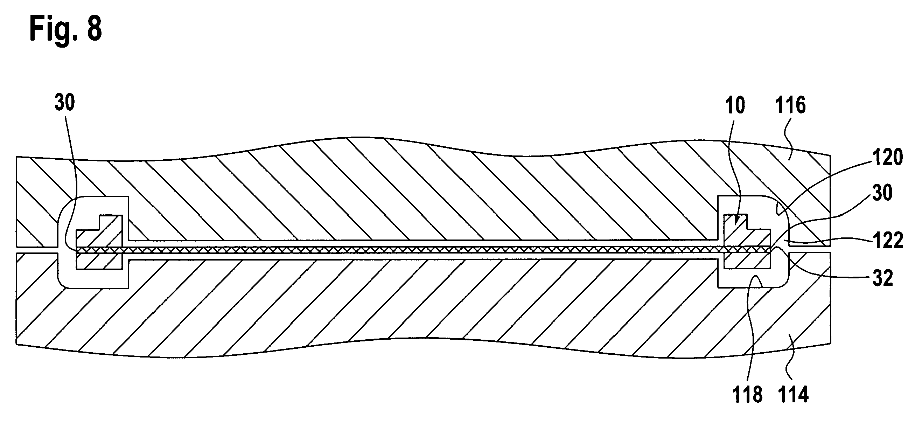

Bei einem dritten Ausführungsbeispiel eines erfindungsgemäßen Elements wird, wie in Fig. 8 dargestellt, der Rahmen 10 als Grundrahmen in zwei Teilwerkzeuge 114 und 116 eingelegt, welche einander ergänzende Formausnehmungen 118 und 120 aufweisen, die sich insgesamt zu einer Außenrahmenform 122 ergänzen, welche den Grundrahmen 10 gänzlich umschließt und somit auch die Trennkante 32 überdeckt, so daß der daraus entstehenden Außenrahmen 100 insgesamt das optische Aussehen des erfindungsgemäßen Elements dominiert und somit auch dessen Form bestimmt.

Durch das gemäß dem dritten Ausführungsbeispiel erfindungsgemäße Anspritzen des Außenrahmens 100 an den Grundrahmen 10 lassen sich auch weitere optisch unschöne Bereiche des Grundrahmens 10, wie beispielsweise Einfallstellen beim Spritzen dickwandiger Bereiche, ausgleichen und überdecken.

Besonders günstig ist es beim Anspritzen des Außenrahmens 100 an dem Grundrahmen 10, wenn dadurch bei der Außenrahmen 100 beispielsweise aus einem die Eigenschaften günstig beeinflussenden Material, wie beispielsweise einem eine vorteilhafte Optik gewährleistendes Material oder einem Verletzungen aufgrund seiner weichen Konsistenz vermeidendem Material, ausgeführt sein, während der Grundrahmen 10 aus einem in sich steifen und die Stabilität gewährleistenden Material hergestellt sein kann.

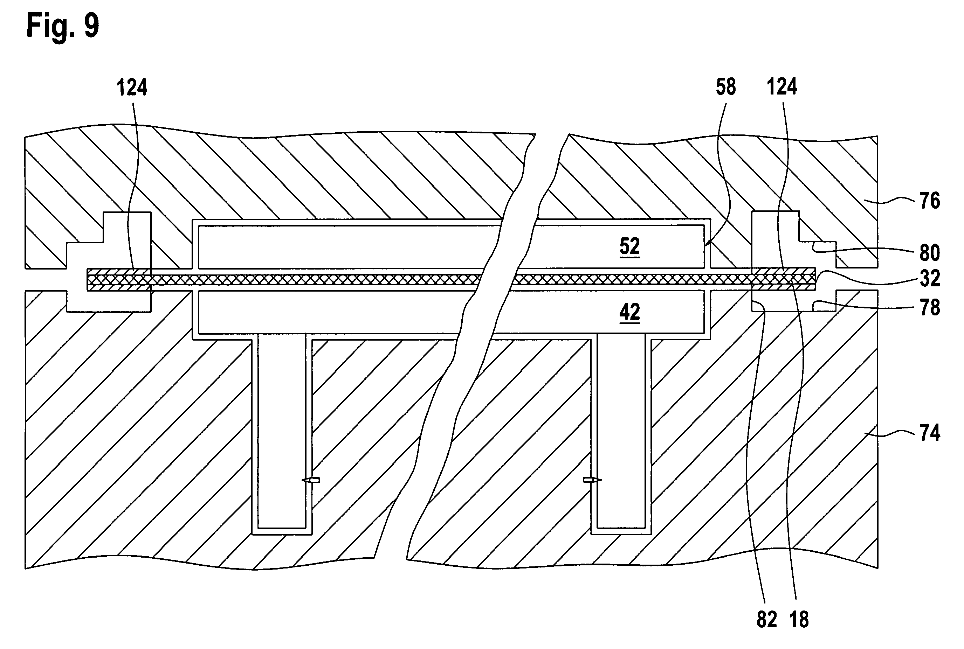

Bei einem vierten Ausführungsbeispiel, dargestellt in Fig. 9, sind diejenigen Elemente, die mit denen des ersten Ausführungsbeispiels identisch sind, mit denselben Bezugszeichen versehen, so daß hinsichtlich der Beschreibung derselben vollinhaltlich auf dieses Ausführungsbeispiel Bezug genommen werden kann.

Im Gegensatz zum ersten Ausführungsbeispiel ist der in den Rahmen 10 einzuspritzende Randbereich 18 durch Versehen desselben mit der Trennkante 32 bereits vor Einsetzen der Positioniereinrichtung 66 in das Teilwerkzeug 74 versehen, so daß der Randbereich 18 bereits vorab aus dem Flachmaterialabschnitt 34 herausgetrennt wurde.

Dadurch besteht die Möglichkeit, die Trennkante 32 derart verlaufen zu lassen, daß diese innerhalb des durch die Rahmenform 82 beim Spritzgießen hergestellten Rahmens 10 liegt und somit sowohl der Randbereich 18 als auch die Trennkante 32 voll in den durch Spritzgießen hergestellten Rahmen 10 eingebettet sind, so daß die durch die Trennkante 32 gegebenenfalls bedingte optische Beeinträchtigung des Rahmens 10 des ersten Ausführungsbeispiels vermieden werden kann.

In diesem Fall kann das Element selbst unmittelbar mit dem Rahmen 10 verwendet werden, es kann aber ebenfalls auch der Rahmen 10 mit einem Außenrahmen 100 wie beim zweiten Ausführungsbeispiel versehen werden.

Um bei dem vierten Ausführungsbeispiel zu verhindern, daß der Randbereich 18, der nunmehr frei in die Rahmenform 82, gebildet aus den Formausnehmungen 78 und 80, hineinragt, beim Spritzgießen umgebogen und beispielsweise an eine Wand der Formausnehmung 78 oder 80 gedrückt wird, ist vorzugsweise der Randbereich 18 vor einem Flüssiggießen, beispielsweise vor oder nach einem Heraustrennen des Flachmaterialstücks 14 längs der Trennkante 32, durch Aufbringen versteifender Materialien 124 formstabilisiert. Beispielsweise besteht die Möglichkeit, den Randbereich 18 mit einer formstabilisierenden Masse zu bedrucken oder anderweitig zu beschichten, so daß der Randbereich 18 nicht mehr biegeschlaff ist, sondern eine für das Spritzgießen des Rahmens 10 ausreichende Eigensteifigkeit aufweist, die sicherstellt, daß der Randbereich 18 vollständig in den Rahmen 10 eingebettet und bis zum Eintrittsbereich 22 von diesem umschlossen wird.

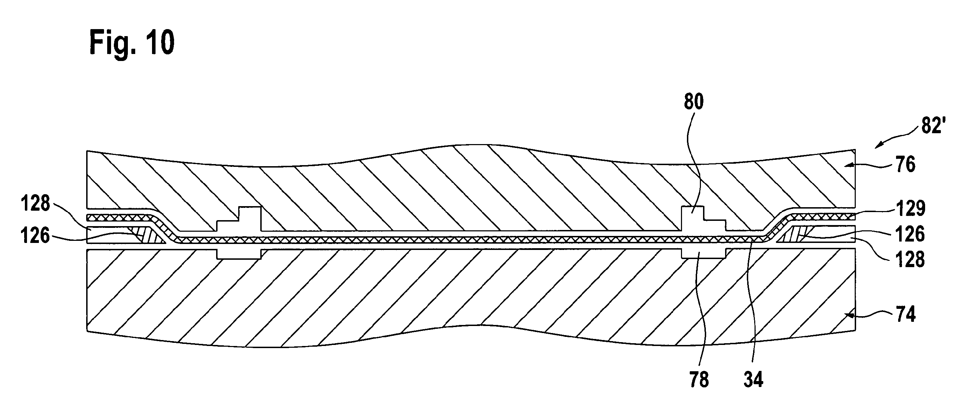

Bei einem fünften Ausführungsbeispiel, dargestellt in Fig. 10 umfaßt die Rahmenform 82' ebenfalls die Formausnehmungen 78 und 80. Radial außerhalb der Formausnehmungen 78 und 80 sind jedoch Spannleisten 126 in Vertiefungen 128 im Teilwerkzeug 76 vorgesehen, welche es erlauben, den Flachmaterialabschnitt 34 im Bereich eines außerhalb der später herzustellenden Trennkante 32 liegenden Abschnittsrandes 129 zu fixieren.

Die Spannleisten 126 können dabei in die Vertiefungen 128 des Teilwerkzeugs 76 einsetzbar oder am Teilwerkzeug 76 durch eine Schwenkvorrichtung schwenkbar gehalten sein.

Es besteht auch die Möglichkeit, die Spannleisten 126 mit deren Oberflächengriffigkeit verbessernden Elementen, wie beispielsweise Vorsprüngen oder Nadeln, zu versehen, um dadurch vorteilhaft die Abschnittsränder 129 des Flachmaterialabschnitts 34 an dem Teilwerkzeug 76 fixieren zu können.

Vorzugsweise erfolgt eine Fixierung des Flachmaterialabschnitts 34 bei abgenommenem Teilwerkzeug 76 so, daß für eine Bedienungsperson die Spannleisten 126 frei und ergonomisch günstig zugänglich sind, um den Flachmaterialabschnitt 34 einzulegen und mit den Spannleisten 126 zu fixieren.

Mit den Spannleisten 126 besteht außerdem die Möglichkeit, den Flachmaterialabschnitt 34 auch in zumindest einer Richtung gespannter Stellung, vorzugsweise in zwei quer zueinander verlaufende Richtungen gespannter Stellung, an dem Teilwerkzeug 76 zu fixieren und in dieser gespannten Stellung dann den Flachmaterialabschnitt 34 mit dem Teilwerkzeug 76 auf das Teilwerkzeug 74 aufzusetzen, um den herzustellenden Rahmen 10 mit dem bereits beschriebenen Flüssiggießverfahren unter Zuhilfenahme der Formausnehmungen 78 und 80 herzustellen.

Dabei wird zweckmäßigerweise der Flachmaterialabschnitt 34 außerhalb der Formausnehmungen 78 und 80 zwischen dem Teilwerkzeug 76 und dem Teilwerkzeug 74 derart zusammengedrückt, daß das beim Flüssiggießverfahren in den Formausnehmungen 78 und 80 flüssige Material zur Herstellung des Rahmens 10 nicht in dem Material des Flachmaterialabschnitts 34, beispielsweise einem Gewebe desselben, radial nach außen über die Formausnehmungen 78 und 80 hinaus wandert.

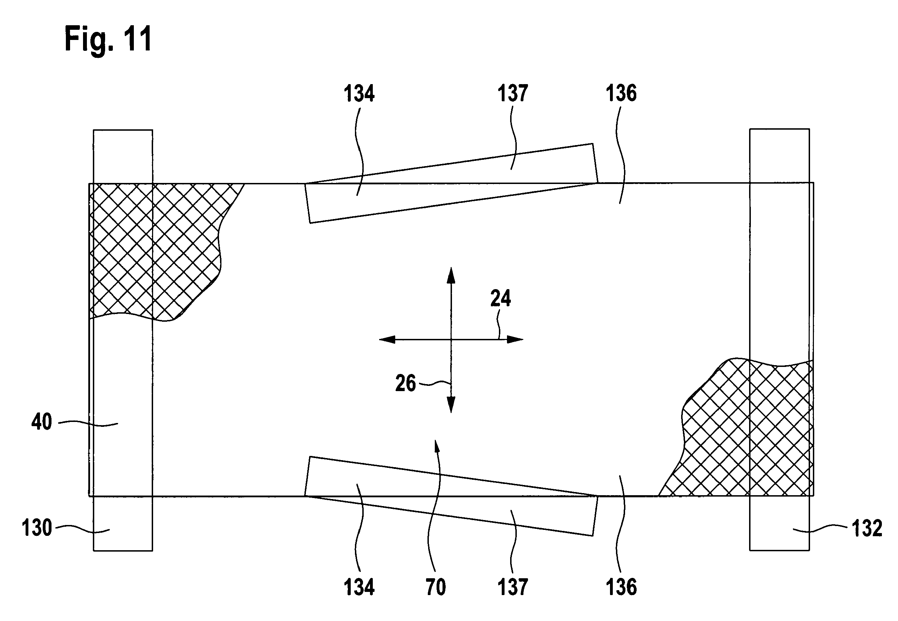

Bei einem sechsten Ausführungsbeispiel, dargestellt in Fig. 11, erfolgt ein Spannen eines Teilabschnitts 70 der Flachmaterialbahn 40 dadurch, daß dieses von einer Abwickelrolle 130 abgewickelt wird und durch eine Spannrolle 132 in der ersten Richtung, beispielsweise der ersten Richtung 24 gespannt wird.

Zusätzlich sind in der zweiten Richtung 26 wirksame Querspannelement 134 vorgesehen, welche jeweils auf einander gegenüberliegende Seitenbereiche 136 des Teilabschnitts 70 wirken, um den Teilabschnitt 70 der zweiten Richtung 26 und quer zur ersten Richtung 24 zu spannen.

Diese Querspannelemente 134 können sich in Richtung der Spannrolle 132 ungefähr V-förmig erweiternd relativ zueinander angeordnete Querspannbänder 137 sein, die sich mit der Flachmaterialbahn 40 mitbewegen und sukzessive auf die auf den Querspannbändern aufliegenden Seitenbereiche 136 in Richtung der zweiten Richtung 26 einwirken um diese durch Auseinanderziehen derselben in der zweiten Richtung 26 zu spannen.

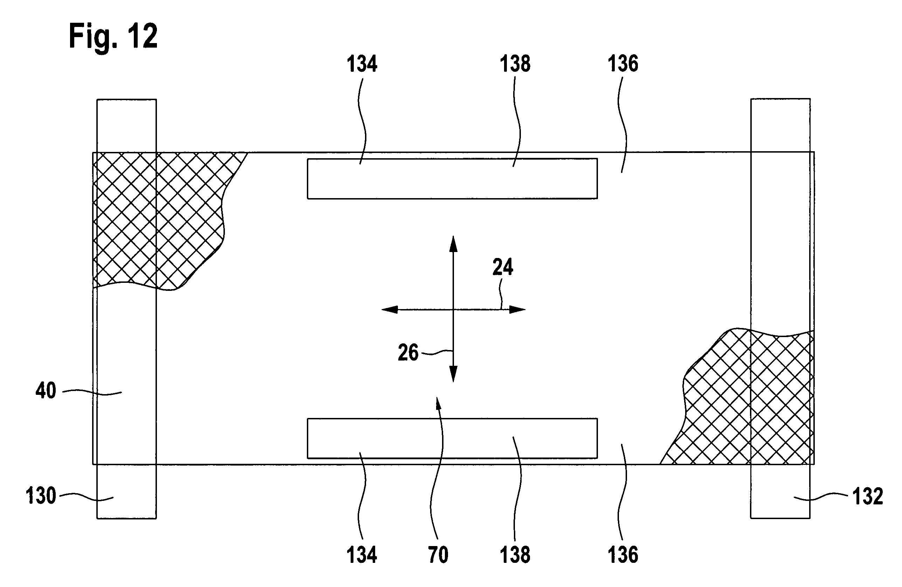

Alternativ dazu ist es aber auch bei einer in Fig. 12 dargestellten Variante des sechsten Ausführungsbeispiels möglich, die Querspannelemente 134 als Querspannrollen auszubilden, die ungefähr parallel zueinander angeordnet sein können, jedoch erst dann wirksam werden, wenn bereits ein Spannen des Teilabschnitts 70 der Flachmaterialbahn 40 zwischen der Abwickelrolle 130 und der Spannrolle 132 in der ersten Richtung 24 erfolgt ist. Durch die nachfolgend wirksam werdenden Querspannrollen 138 ist dann noch das zusätzliche Spannen in der zweiten Richtung 26 realisierbar.

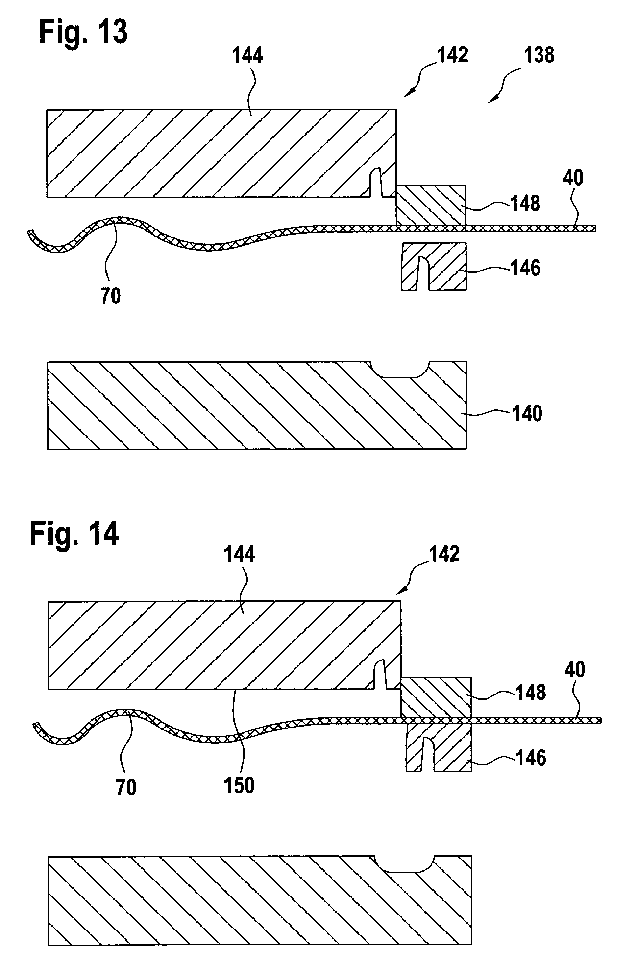

Ein derart gespannter Teilabschnitt 70 der Flachmaterialbahn wird, wie in Fig. 13 dargestellt, beim sechsten Ausführungsbeispiel in ein Spritzgußwerkzeug 139 eingeführt, welches ein unteres Teilwerkzeug 140 und ein mehrteiliges oberes Teilwerkzeug 142 umfaßt. Das Teilwerkzeug 142 weist beispielsweise eine Basis 144 auf, relativ zu welcher ein unterer äußerer Abschnitt 146 und ein oberer äußerer Abschnitt 148 bewegbar sind, wobei der untere äußere Abschnitt 146 dem Teilwerkzeug 140 zugewandt angeordnet ist, während der obere äußere Abschnitt 148 auf einer dem Teilwerkzeug 140 abgewandten Seite des unteren äußeren Abschnitts 146 liegt.

Der Teilabschnitt 70 der Flachmaterialbahn 40 ist dabei zwischen dem unteren äußeren Abschnitt 146 und dem oberen äußeren Abschnitt 148 des Teilwerkzeugs 142 hindurchführbar und, wie in Fig. 12 dargestellt, durch Zusammenfahren des unteren äußeren Abschnitts 146 und des oberen äußeren Abschnitts 148 zwischen diesen einklemmbar, so daß dadurch der Teilabschnitt 70 der Flachmaterialbahn 40 durch die beiden äußeren Abschnitte 146 und 148 fixierbar ist (Fig. 14).

Das Einklemmen des Teilabschnitts 70 zwischen dem unteren äußeren Abschnitt 146 und dem oberen äußeren Abschnitt 148 erfolgt dabei bei einem Verlauf des Teilabschnitts 70 dergestalt, daß dieser sich im Abstand von einer dem Teilwerkzeug 140 zugewandten Seite 150 der Basis 144 des Teilwerkzeugs 142 erstreckt (Fig. 14).

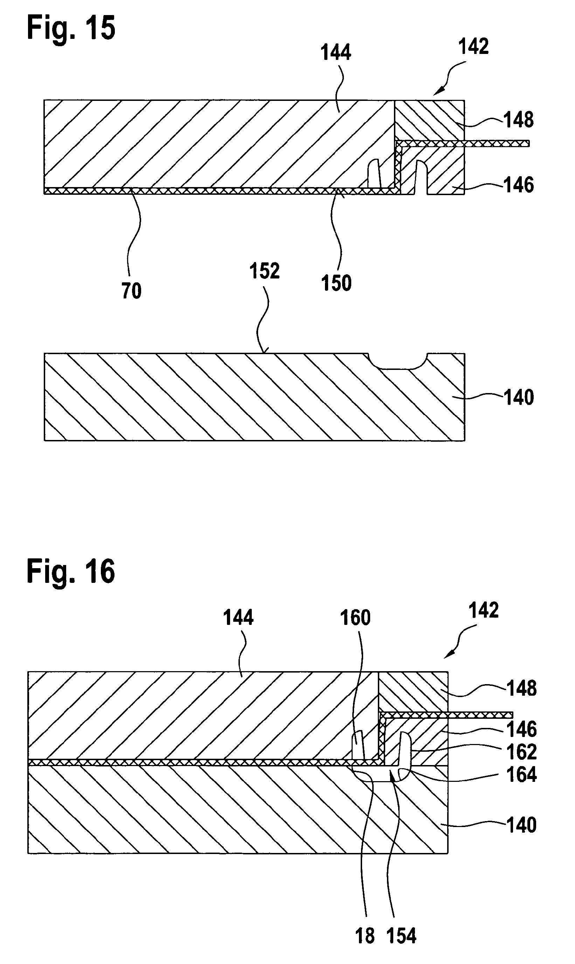

Die äußeren Abschnitte 146 und 148 des Teilwerkzeugs 142 werden, wie in Fig. 15 dargestellt, so weit relativ zur Basis 144 verschoben, daß der Abschnitt 70 der Flachmaterialbahn 40 einerseits an der Seite 150 der Basis 144 anliegt und andererseits zwischen der Basis 144 und dem unteren äußeren Abschnitt 146 quer zur Seite 150 in Richtung des oberen äußeren Abschnitts 148 verläuft und dann zwischen der Basis 144 und dem unteren äußeren Abschnitt 146 wiederum eingeklemmt gehalten ist (Fig. 15).

Werden nun das Teilwerkzeug 140 und das Teilwerkzeug 142 zusammengefahren (Fig. 16), so daß eine dem Teilwerkzeug 142 zugewandte Seite 152 des Teilwerkzeugs 140 ebenfalls an dem Abschnitt 70 im Bereich der Basis 144 und einer dieser gegenüberliegenden Seite anliegt, so sind die beiden Teilwerkzeuge 140 und 142 vollständig geschlossen und bilden insgesamt eine Rahmenform 154 als Gießform mit folgenden Formausnehmungen.

Die Basis 144 weist eine Ausnehmung 160 auf, die einen Seitenschenkel 166 eines U bildet zusammen mit einer Ausnehmung 162 in dem unteren äußeren Abschnitt 146, der ebenfalls einen äußeren Schenkel 170 eines U bildet, welcher zum Seitenschenkel 166 ungefähr parallel verläuft. Ferner weist das Teilwerkzeug 140 eine Formausnehmung 164 auf, die in die Formausnehmungen 160 und 162 bei zusammengefahrenen Teilwerkzeugen 140, 142 übergeht und einen Mittelschenkel 168 für die beiden durch die Ausnehmungen 160 und 162 gebildeten äußeren Schenkel des U bildet.

In diese Rahmenform 154 hinein verläuft das Flachmaterial 14 mit dem Randbereich 18 und zwar derart, daß der Randbereich 18 im Bereich eines Übergangs von der Formausnehmung 164 in die Formausnehmung 160 diesen Übergangsbereich durchsetzt und, daß der Randbereich 18 weiter zwischen den beiden Seitenschenkeln 166, 170, gebildet durch die Formausnehmungen 160 und 162 des U auf einer den Seitenschenkeln 166, 170 zugewandten Seite der den Mittelschenkel 168 des U bildenden Formausnehmung 164 verläuft und sich dann aufgrund des Verlaufs zwischen der Basis 144 und dem unteren äußeren Abschnitt 146 senkrecht von dem durch die Formausnehmung 146 gebildeten Mittelschenkel 168 des U weg erstreckt.

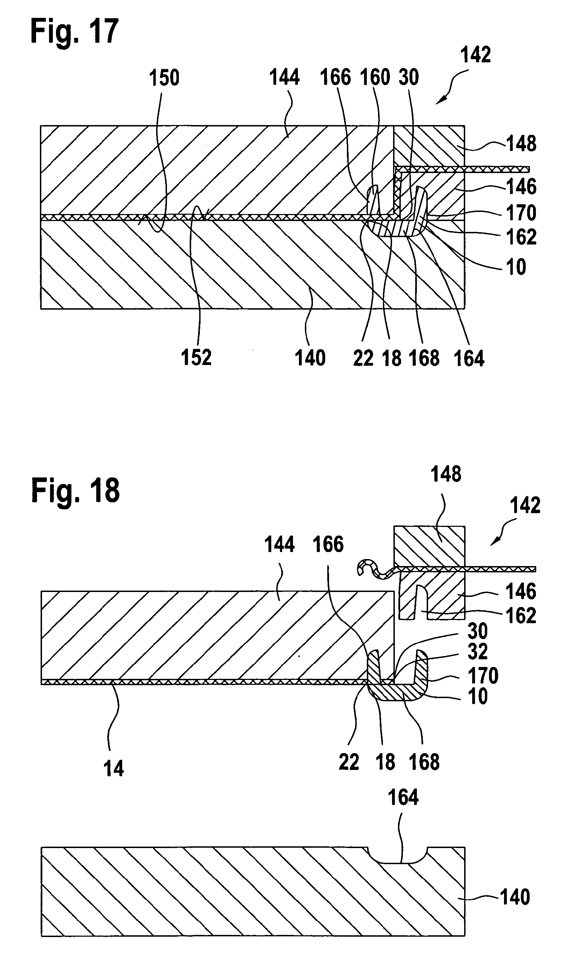

Durch Spritzgießen mit dieser Rahmenform 154 entsteht, wie in Fig. 17 dargestellt, der Rahmen 10, in welchen durch den Eintrittsbereich 22 der Randbereich 18 eintritt, wobei dieser Randbereich den Rahmen 10 im Bereich eines Übergangs durch einen von der Formausnehmung 160 gebildeten Seitenschenkel 166 und einer durch die Formausnehmung 164 gebildeten Mittelschenkel 168 durchsetzt und dann an dem Mittelschenkel 168 im Bereich zwischen beiden Seitenschenkeln 166 und 170 des Rahmens 10 bis ungefähr zu einem mittigen Bereich derselben verläuft und dann ausgehend von dem Austrittsbereich aus dem Rahmen 10 quer zum Mittelschenkel 168 verläuft.

Zum Entnehmen des Rahmens 10 und des mit diesem verbundenen Flachmaterialstücks 14 werden der obere äußere Abschnitt 148 und der untere äußere Abschnitt 146 gemeinsam relativ zur Basis 144 bewegt, und zwar von dem Teilwerkzeug 140 weg (Fig. 18), so daß aufgrund der Beanspruchung des Flachmaterials dieses am Austrittsbereich 30 abreißt und somit an diesem auch die Trennkante 32 bildet. Ferner wird das Teilwerkzeug 140 vom Teilwerkzeug 142 noch wegbewegt, so daß letztendlich der Rahmen 10 mit den beiden Seitenschenkeln 166 und 170 und dem Mittelschenkel 168 sowie dem mit diesem verbundenen Flachmaterial 14 aus den Teilwerkzeugen 140, 142 entnommen und als erfindungsgemäßes Element zum Schutz gegen Wind und/oder Sonneneinstrahlung bei einem Kraftfahrzeug eingesetzt werden kann.

Der Rahmen 10 kann dabei als alleiniger Rahmen 10 übernommen werden oder, wie beim zweiten Ausführungsbeispiel als Grundrahmen zum Einsatz kommen und noch mit einem Außenrahmen versehen werden.

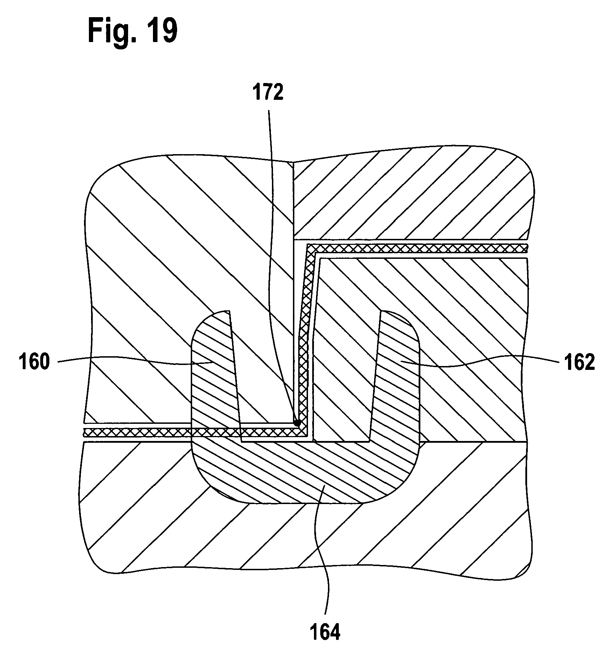

Um eine exakte Trennkante 32 zu erreichen, ist bei einer Gießform zur Herstellung eines siebten Ausführungsbeispiels vorzugsweise noch an der Basis 144, beispielsweise nahe des Austrittsbereichs 30, wie in Fig. 19 dargestellt, ein Heizfaden 172 vorgesehen, welcher an dieser Stelle die Flachmaterialbahn durch Aufheizen strukturverändert wird und somit das Abreißen unter Bildung der Trennkante 32 ermöglicht, so daß beim siebten Ausführungsbeispiel gemäß Fig. 19 die Bildung der Trennkante 32 in exakter Form gewährleistet ist.

Auch bei dem siebten Ausführungsbeispiel sind all diejenigen Elemente die mit denen der voranstehenden Ausführungsbeispiele identisch sind, mit denselben Bezugszeichen versehen, so daß hinsichtlich der Beschreibung derselben vollinhaltlich auf die voranstehenden Ausführungsbeispiele Bezug genommen werden kann.

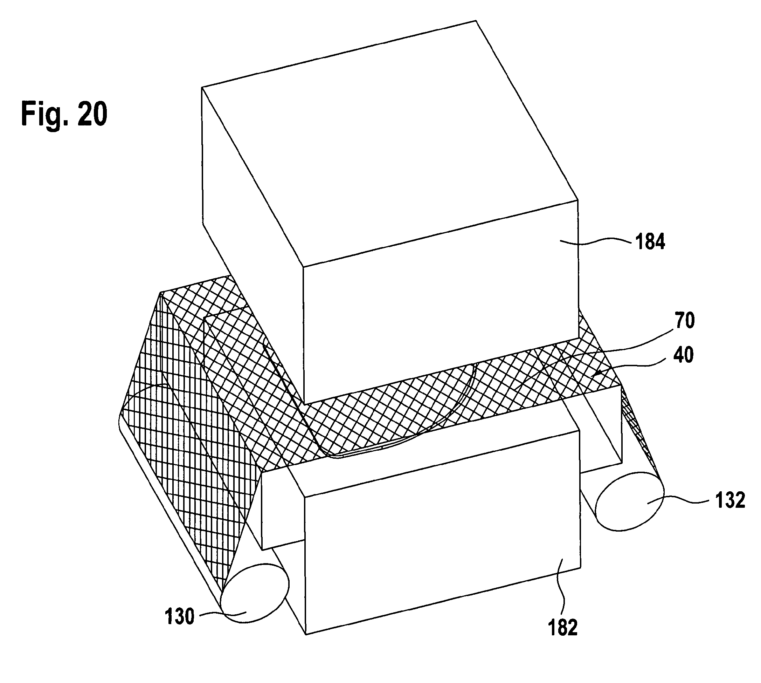

Bei einem achten Ausführungsbeispiel, dargestellt in Fig. 20, sind diejenigen Elemente, die mit den voranstehenden Elementen identisch sind, mit denselben Bezugszeichen versehen, so daß hinsichtlich der Ausführungen zu diesen vollinhaltlich auf die vorangehenden Ausführungsbeispiele Bezug genommen werden kann.

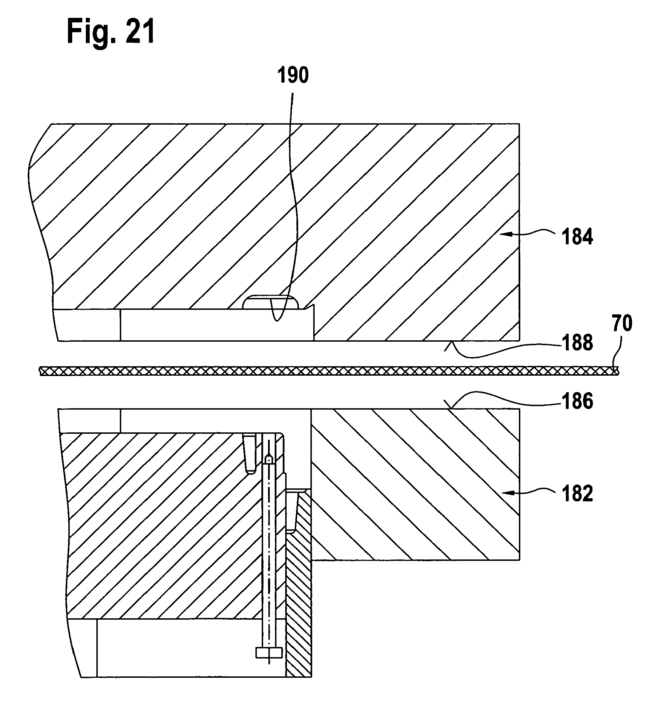

Wie beim sechsten Ausführungsbeispiel sind auch beim achten Ausführungsbeispiel die Abwickelrolle 130 und die Spannrolle 132 vorgesehen, die den Teilabschnitt 70 der Flachmaterialbahn 40 im Bereich zwischen zwei Teilwerkzeugen 182 und 184 spannen, wobei, wie in Fig. 20 und 21 dargestellt, der Abschnitt 70 zunächst im Abstand von beiden Teilwerkzeugen 182, 184, insbesondere den einander zugewandten Seiten 186 und 188, verläuft.

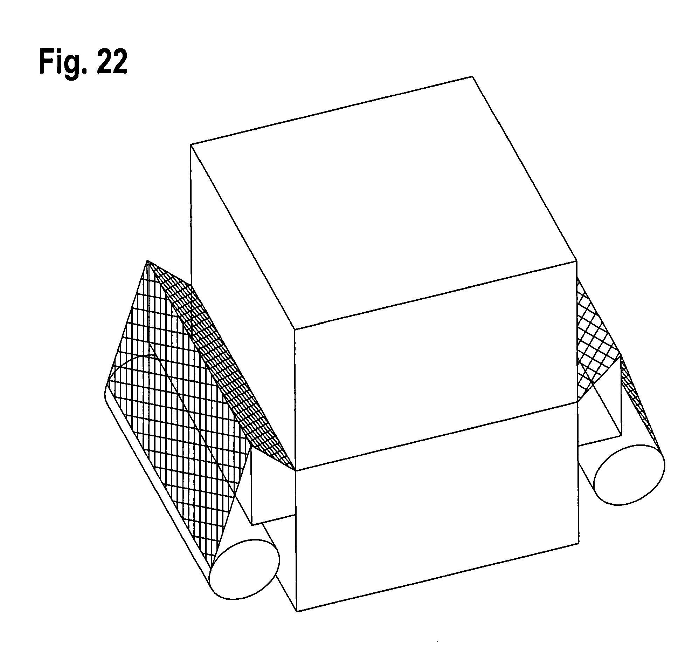

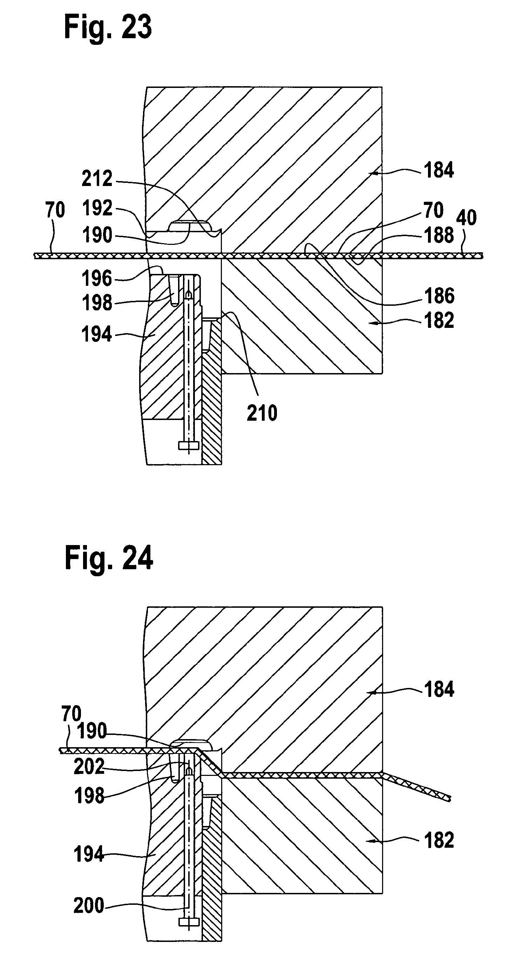

Werden die beiden Teilwerkzeuge 182 und 184 zusammengefahren, wie in Fig. 22 und Fig. 23 dargestellt, so erfolgt zunächst ein Einspannen des Abschnitts 70 der Flachmaterialbahn 40 zwischen äußeren Bereichen der Teilwerkzeuge 182 und 184, welche die einander zugewandten Seiten 186 und 188 tragen. Bei dem achten Ausführungsbeispiel trägt das Teilwerkzeug 184 eine Formausnehmung 190, welche einen Mittelschenkel eines im Querschnitt U-förmig ausgebildeten Rahmens bilden soll, wobei diese Formausnehmung 190 von einer Ebene 192 ausgeht, welche im Abstand von der Seite 188 verläuft, so daß der Teilabschnitt 70 der Flachmaterialbahn 40 ebenfalls ohne weitere Einwirkung im Abstand von der Ebene 192 verläuft.

Ein Innenbereich 194 des Teilwerkzeugs 182 ist nun mit seiner dem Teilwerkzeug 184 zugewandten Seite 196 soweit auf das Teilwerkzeug 184 zu bewegbar, daß der Teilabschnitt 70 zwischen der Seite 196 des Innenbereichs 194 des Teilwerkzeugs 182 und der Seite 192 des Teilwerkzeugs 184 einspannbar ist, wobei ein Verschieben des Abschnitts 70 der Flachmaterialbahn 40 bis zur Anlage derselben an der Seite 192 erfolgt (Fig. 24).

Der Innenbereich 194 weist dabei eine Formausnehmung 198 auf, welche sich durch Überlappung an die Formausnehmung 190 anschließt, um einen Seitenschenkel zu dem durch die Formausnehmung 190 gebildeten Mittelschenkel des Rahmens 10 zu formen.

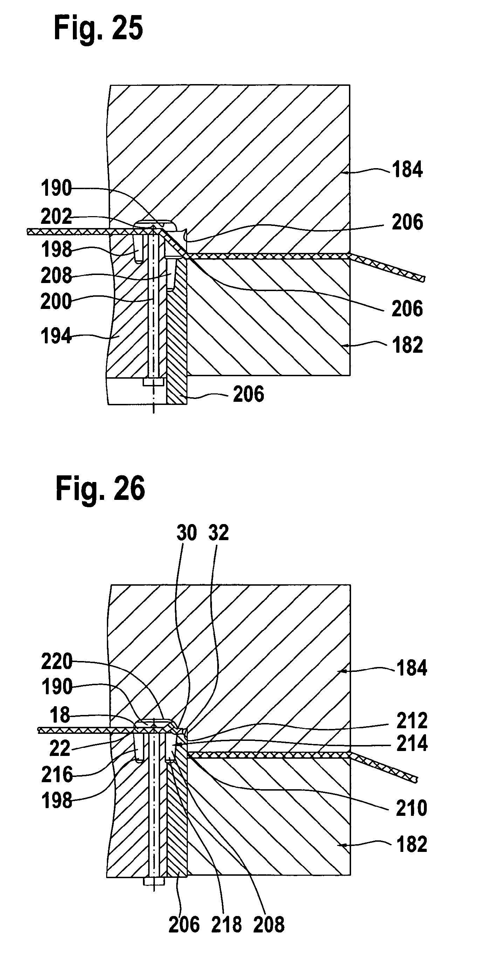

Ferner ist der Innenbereich 194 noch mit Nadelträgern 200 versehen, welche Fixiernadeln 202 tragen und relativ zum Innenbereich soweit bewegbar sind, daß die Fixiernadeln 202 der Nadelträger 200 die Flachmaterialbahn 40 im Bereich der Formausnehmung 190 durchdringen und damit relativ zu dem Innenbereich 194 des Teilwerkzeugs 182 exakt fixieren (Fig. 25).

Zwischen dem Innenbereich 194 des Teilwerkzeugs 182 ist noch ein Schieber 206 angeordnet, welcher einerseits auf seiner dem Innenbereich 194 zugewandten Seite eine Formausnehmung 208 zur Bildung des zweiten, sich an einen durch die Formausnehmung 190 gebildeten Mittelschenkel anschließenden Seitenschenkels umfaßt und andererseits noch eine Schneidkante 210 aufweist, welche auf einer dem Teilwerkzeug 184 zugewandten Außenseite des Schiebers 206 liegt und mit einer Vertiefung 212 im Teilwerkzeug 184 außerhalb der Formausnehmung 190 zusammenwirkt.

Das Einführen des Schiebers 206 führt zur korrekten Positionierung der Formausnehmung 208 im Anschluß an und überlappend zur Formausnehmung 190, wie in Fig. 26 dargestellt und zum Eintauchen der Schneidkante 210 in die Vertiefung 212, so daß ein Abtrennen der Flachmaterialbahn 40 im Abstand von einem Austrittsbereich 30 aus dem zu bildenden Rahmen 10 erfolgt, und zwar auf einer dem Eintrittsbereich 22 des zu bildenden Rahmens 10 gegenüberliegenden Seite.

Anschließend erfolgt ein Spritzgießen mit der nach Einschieben des Schiebers 206 endgültig komplettierten Rahmenform 214 als Gießform, umfassend die Formausnehmungen 190, 198 und 208 zum Spritzen des insgesamt im Querschnitt U-förmigen Rahmens 10, dessen beide Seitenschenkel 216, 218 durch die Formausnehmung 198 und 208 gebildet werden und dessen Mittelschenkel 220 durch die Formausnehmung 190 gebildet wird.

Bei diesem achten Ausführungsbeispiel des Rahmens 10 durchsetzt der Randbereich 18 den Übergang zwischen dem Seitenschenkel 216 und dem Mittelschenkel 220 sowie den Übergang zwischen dem Seitenschenkel 218 und dem Mittelschenkel 220 und läuft ferner noch entlang des Mittelschenkels 220 auf seiner den Seitenschenkeln 216, 218 zugewandten Seite, so daß der Randbereich 18 aus dem dem Eintrittsbereich 22 gegenüberliegenden Übergangsbereich zwischen dem Seitenschenkel 218 und dem Mittelschenkel 220 über den Austrittsbereich 30 austritt.

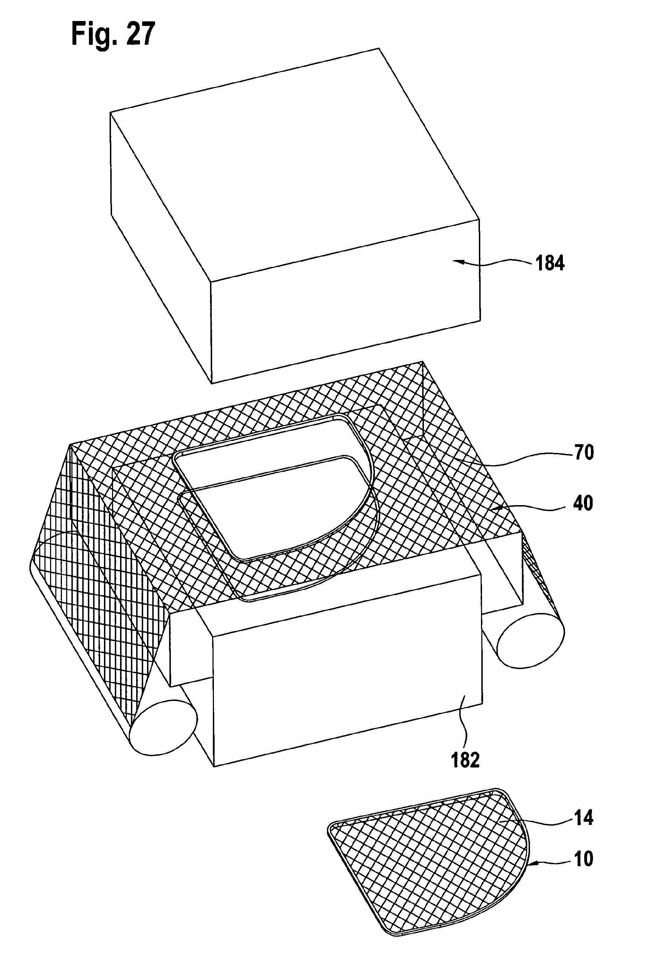

Nach Öffnen der Teilwerkzeuge 182 und 184 (Fig. 27) kann der durch das Spritzgießen fertiggestellte und fest mit dem Flachmaterialstück 14 verbundene Rahmen 10 in einfacher Weise von dem Teilabschnitt 70 der Flachmaterialbahn 40 getrennt werden, da durch die Schneidkante 210 bereits die Trennkante 32 geschaffen wurde, die allerdings im Abstand von dem Rahmen 10 verläuft.

Somit ist der Rahmen 10 vorzugsweise als Grundrahmen einzusetzen, auf welchen ein Außenrahmen aufsetzbar ist, wie im Zusammenhang mit dem zweiten oder dritten Ausführungsbeispiel beschrieben, um den über den Rahmen 10 überstehenden und bis zur Trennkante 32 verlaufenden Bereich des Randbereichs optisch zu verkleiden.

Vorzugsweise lassen sich die erfindungsgemäßen Elemente bei Windstopeinrichtungen gemäß den deutschen Patentanmeldungen DE 100 53 701 A1 und/oder 195 45 405 A1 einsetzen, wobei diese Elemente sowohl als Abdeckelemente als auch als Elemente des Windschotts eingesetzt werden können.

Hinsichtlich der Ausbildung und des Einsatzes der Elemente bei derartigen Windstopeinrichtungen wird ihm Rahmen der vorliegenden Anmeldung vollinhaltlich auf die Ausführungen in den zitierten Druckschriften Bezug genommen.

## Patentansprüche

1. Element für Kraftfahrzeuge zum Schutz gegen Wind oder Sonneneinstrahlung, umfassend einen Rahmen (10) mit einer Rahmenöffnung (12), in welcher sich ein windhinderndes oder Sonnenlicht dämpfendes Flachmaterialstück (14) erstreckt, welches an dem Rahmen (10) gehalten ist, **dadurch gekennzeichnet, daß** ein Randbereich (18) des Flachmaterialstücks (14) in dem Rahmen (10) eingebettet ist und daß der Rahmen (10) im Zuge eines Flüssiggießverfahrens an den Randbereich (18) des Flachmaterialstücks (14) angeformt und **dadurch** mit dem Randbereich (18) verbunden ist.

2. Element nach Anspruch 1, **dadurch gekennzeichnet, daß** der Randbereich (18) des Flachmaterialstücks (14) in dem durch Spritzgießen angeformten Rahmen (10) eingebettet ist.

3. Element nach Anspruch 1 oder 2, **dadurch gekennzeichnet, daß** der Randbereich (18) des Flachmaterialstücks (14) über einen Eintrittsbereich (22) in den Rahmen (10) eintritt und über einen Austrittsbereich (30) des Rahmens (10) aus diesem austritt.

4. Element nach einem der voranstehenden Ansprüche, **dadurch gekennzeichnet, daß** sich der Randbereich (18) bis zu einer außerhalb des Rahmens (10) liegenden Trennkante (32) erstreckt.

5. Element nach Anspruch 5, **dadurch gekennzeichnet, daß** die Trennkante (32) im Austrittsbereich (30) mit einer Außenseite des Rahmen abschließt.

6. Element nach einem der Ansprüche 1 bis 3, **dadurch gekennzeichnet, daß** der Randbereich (18) und die Trennkante (32) des Flachmaterialstücks (14) vollständig in dem Rahmen (10) eingebettet sind.

7. Element nach einem der voranstehenden Ansprüche, **dadurch gekennzeichnet, daß** das Flachmaterialstück (14) aus einem in sich steifen Material ist.

8. Element nach einem der voranstehenden Ansprüche, **dadurch gekennzeichnet, daß** das Flachmaterialstück (14) aus einem biegeschlaffen Material ist.

9. Element nach einem der voranstehenden Ansprüche, **dadurch gekennzeichnet, daß** das Flachmaterialstück (14) in dem angespritzen Rahmen (10) gespannt gehalten ist.

10. Element nach einem der voranstehenden Ansprüche, **dadurch gekennzeichnet, daß** das Flachmaterialstück (14) zugelastisch ausgebildet ist.

11. Element nach einem der voranstehenden Ansprüche, **dadurch gekennzeichnet, daß** das Flachmaterialstück (14) in dem Rahmen (10) in Richtung seiner Flächenausdehnung unter Spannung gehalten ist.

12. Element nach einem der voranstehenden Ansprüche, **dadurch gekennzeichnet, daß** der Rahmen (10) als ein an das Flachmaterialstück (14) angespritzter Grundrahmen (10) ausgebildet ist und einen zumindest teilweise den Grundrahmen (10) umschließenden Außenrahmen (100) trägt.

13. Element nach Anspruch 12, **dadurch gekennzeichnet, daß** der Außenrahmen (100) die Trennkante (32) des Randbereichs (18) überdeckt.

14. Element nach Anspruch 12 oder 13, **dadurch gekennzeichnet, daß** der Außenrahmen (100) einen über den Austrittsbereich (30) überstehenden Teil des Randbereichs (18) überdeckt.

15. Element nach einem der Ansprüche 12 bis 14, **dadurch gekennzeichnet, daß** der Außenrahmen (100) den Austrittsbereich (30) des Randbereichs (18) des Flachmaterialstücks (14) am Grundrahmen (10) überdeckt.

16. Element nach einem der Ansprüche 12 bis 15, **dadurch gekennzeichnet, daß** der Außenrahmen (100) auf den Grundrahmen (10) formschlüssig aufgesetzt ist.

17. Element nach einem der Ansprüche 1 bis 16, **dadurch gekennzeichnet, daß** der Außenrahmen (100) an dem Grundrahmen (10) mit Fixierelementen gehalten ist.

18. Element nach einem der Ansprüche 1 bis 16, **dadurch gekennzeichnet, daß** der Außenrahmen (100) am den Grundrahmen (10) stoffschlüssig fixiert ist.

19. Element nach einem der Ansprüche 1 bis 16, **dadurch gekennzeichnet, daß** der Außenrahmen (100) am Grundrahmen (10) angespritzt ist.

20. Verfahren zur Herstellung eines Elements für Kraftfahrzeuge zum Windschutz und/oder Sonnenschutz, bei welchem ein windhinderndes und/oder Sonnenstrahlung dämpfendes Flachmaterialstück (14) an einem Rahmen (10) fixiert ist, **dadurch gekennzeichnet, daß** der Rahmen (10) im Zuge eines Flüssiggießverfahrens an einen Randbereich (18) des Flachmaterialstücks (14) angeformt wird.

21. Verfahren nach Anspruch 20, **dadurch gekennzeichnet, daß** der Rahmen (10) den Randbereich (18) einbettend angeformt wird.

22. Verfahren nach Anspruch 21, **dadurch gekennzeichnet, daß** der Rahmen (10) den Randbereich (18) beiderseits einbettend angeformt wird.

23. Verfahren nach einem der voranstehenden Ansprüche, **dadurch gekennzeichnet, daß** das Flachmaterialstück (14) gespannt und nachfolgend in dem gespannten Zustand der Rahmen (10) an dem Randbereich (18) angeformt wird.

24. Verfahren nach Anspruch 23, **dadurch gekennzeichnet, daß** das Flachmaterialstück (14) innerhalb der späteren Rahmenöffnung (16) gespannt gehalten wird, und dann der Rahmen (10) in dem gespannten Zustand an den überstehenden Randbereich (18) angeformt wird.

25. Verfahren nach Anspruch 23 oder 24, **dadurch gekennzeichnet, daß** das Flachmaterialstück (14) außerhalb des anzuspritzenden Rahmens (10) gespannt gehalten und der Rahmen (10) dann in dem gespannten Zustand angespritzt wird.

26. Verfahren nach einem der Ansprüche 23 bis 25, **dadurch gekennzeichnet, daß** das Flachmaterialstück (14) durch die Gießform (82', 154, 214) während des Anspritzens des Rahmens (10) gespannt gehalten wird.

27. Verfahren nach Anspruch 26, **dadurch gekennzeichnet, daß** das Flachmaterialstück (14) in der Gießform (82', 154, 214) zum Anspritzen des Rahmens (10) eingeklemmt wird.

28. Verfahren nach einem der Ansprüche 20 bis 27, **dadurch gekennzeichnet, daß** das Flachmaterialstück (14) innerhalb des Randbereichs (18) fixiert und der Randbereich (18) zum Anformen des Rahmens (10) in der Gießform (82) aufgenommen wird.

29. Verfahren nach einem der Ansprüche 20 bis 28, **dadurch gekennzeichnet, daß** das Flachmaterialstück (14) längs einer Trennkante (32) aus einer Flachmaterialbahn (40) herausgetrennt wird.

30. Verfahren nach Anspruch 29, **dadurch gekennzeichnet, daß** die Trennkante (32) an den Randbereich (18) angrenzt.

31. Verfahren nach Anspruch 29, **dadurch gekennzeichnet, daß** das Flachmaterialstück (14) vor einem Anformen des Rahmens (10) längs der Trennkante (32) herausgetrennt wird.

32. Verfahren nach Anspruch 29, **dadurch gekennzeichnet, daß** das Flachmaterialstück (14) in der Gießform längs der Trennkante (32) getrennt wird.

33. Verfahren nach einem der Ansprüche 32, **dadurch gekennzeichnet, daß** beim Schließen oder Öffnen der Gießform das Flachmaterialstück (14) längs der Trennkante (32) getrennt wird.

34. Verfahren nach einem der Ansprüche 28 bis 31, **dadurch gekennzeichnet, daß** die Trennkante eine Schnittkante (32) ist.

35. Verfahren nach einem der Ansprüche 20 bis 34, **dadurch gekennzeichnet, daß** der Randbereich (18) des Flachmaterialstücks (14) vor dem Anformen des Rahmens (10) stabilisiert wird.

36. Verfahren nach Anspruch 35, **dadurch gekennzeichnet, daß** der Randbereich (18) versteift wird.

37. Verfahren nach einem der Ansprüche 20 bis 36, **dadurch gekennzeichnet, daß** der Rahmen als Grundrahmen (10) an den Randbereich (18) angeformt wird und auf dem Grundrahmen (10) ein Außenrahmen (100) angeordnet wird.

38. Verfahren nach einem der Ansprüche 37, **dadurch gekennzeichnet, daß** der Außenrahmen (100) formschlüssig auf den Grundrahmen (10) aufgesetzt wird.

39. Verfahren nach einem der Ansprüche 37, **dadurch gekennzeichnet, daß** der Außenrahmen (100) stoffschlüssig am Grundrahmen (10) gehalten wird.

40. Verfahren nach einem der Ansprüche 37, **dadurch gekennzeichnet, daß** der Außenrahmen (100) an den Grundrahmen (10) angeformt wird.
